(19) Europäisches Patentamt
European Patent Office
Office européen des brevets

(11) EP 4 016 064 B1

## (12) EUROPEAN PATENT SPECIFICATION

(45) Date of publication and mention
of the grant of the patent:
**11.09.2024 Bulletin 2024/37**

(21) Application number: **21212232.9**

(22) Date of filing: **03.12.2021**

(51) International Patent Classification (IPC):
***G01N 25/72*** *(2006.01)*      ***G01N 21/88*** *(2006.01)*

(52) Cooperative Patent Classification (CPC):
**G01N 25/72; B22F 10/28; B22F 10/37; B22F 12/41;
B22F 12/90; B33Y 30/00; B33Y 40/00; B33Y 50/02;
G01N 21/8851; G01N 21/94**

(54) **ADDITIVE MANUFACTURING OPTICAL INSPECTION SYSTEM**

OPTISCHES PRÜFSYSTEM FÜR DIE ADDITIVE HERSTELLUNG

SYSTÈME D'INSPECTION OPTIQUE DE FABRICATION ADDITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2020 US 202063127265 P**

(43) Date of publication of application:
**22.06.2022 Bulletin 2022/25**

(73) Proprietor: **The Boeing Company
Arlington, VA 22202 (US)**

(72) Inventor: **Hiller, Nathan D.
Chicago, IL 60606-1596 (US)**

(74) Representative: **Hoffmann Eitle
Patent- und Rechtsanwälte PartmbB
Arabellastraße 30
81925 München (DE)**

(56) References cited:
**US-A1- 2017 120 337     US-A1- 2018 104 742**

**Description**

FIELD

The invention relates to an inspection system and method for detecting contaminant in a material to determine whether the material is to be used for printing with an additive manufacturing assembly, and more particularly, a system and method to identify the presence of contaminant within a metal powder prior to commencing printing.

BACKGROUND

In additive manufacturing, with using an additive printer assembly, an intense laser beam is generally used to sinter metal powder for printing a part. The metal powder is either free from contaminant or if contaminant is present, the contaminant present needs to be at an acceptable level prior to allowing the metal powder to be used for printing the part. The presence of contaminant can compromise strength of the part being produced by the additive printing process. As a quality control measure, there is a need to identify and quantify the contaminant within the material, such as metal powder, to be sintered prior to deciding whether to permit the material to be sintered by the laser beam in the additive printing process.

Based on the particular part being fabricated by the additive printing process, the detection of contaminant within the material to be sintered provides the operator the opportunity to detect and quantify the contaminant. If there is an absence of contaminant in the material the operator of an additive printer assembly can proceed to use the material for printing. Should the operator detect and quantify contaminant contained within the material to be sintered, the operator can proceed with printing if the amount of contaminant present within the material to be sintered is acceptable to specifications for the part being manufactured. Should the amount of contaminant be unacceptable, the operator can choose to remove the contaminant from the material until the content is at an acceptable level or elect to remove the material containing the unacceptable content from the additive printing process.

In an example of additive printing, the material will contain metal powder and the contaminant, if present, will be a polymer fiber. Detection of contaminant, such as polymer fiber, is presently being carried out with the application of ultraviolet ("UV") electromagnetic radiation onto a layer of material on a building tank of an additive printer assembly prior to printing the layer of material. Should a polymer fiber be present and absorbs the UV electromagnetic radiation, the polymer fiber will in turn emit a visible light. This emitting of visible light is referred to as a fluorescent occurrence, which in this example is a weak electromagnetic radiation emission and is difficult to visually differentiate between the polymer fiber contaminant the metal powder, intended to be printed. In order to enhance the visual contrast between the polymer fiber contaminant and the metal powder intended to be printed, the operator has to increase the power of the UV electromagnetic radiation. Enhancing the power of the UV electromagnetic transmission to enhance a visual contrast between the polymer fiber contaminant and the metal powder is a safety issue with respect to exposure to humans of the enhanced UV electromagnetic transmission.

As a result, there is a need to provide a detection system and method for detecting contaminant within material intended to be additively printed, for example, such as detecting the presence of a contaminant of polymer fiber within a metal powder used in additive manufacturing, which provides a visually readably detectable electromagnetic emission contrast between the metal powder and the polymer fiber contaminant and yet not create a safety or health issue to the operator and the operator's personnel who work within proximity to the additive printing process.

US 2018/0104742 A1, according to its abstract, states a method for inspection of additive manufactured parts and monitoring operational performance of an additive manufacturing apparatus is provided. The method includes a heating step for heating an area of a build platform on which at least one part is built by the additive manufacturing apparatus. An obtaining step is used for obtaining, in real-time during an additively manufactured build process, a thermographic scan of the area of the build platform. An evaluating step evaluates, by a processor, the thermographic scan. A determining step determines, based on the evaluating, whether an operational flaw with the additive manufacturing apparatus has occurred or a defect in the at least one part has occurred.

US 2017/0120337 A1, according to its abstract, states methods and systems are provided for using optical interferometry in the context of material modification processes such as surgical laser, sintering, and welding applications. An imaging optical source that produces imaging light. A feedback controller controls at least one processing parameter of the material modification process based on an interferometry output generated using the imaging light. A method of processing interferograms is provided based on homodyne filtering. A method of generating a record of a material modification process using an interferometry output is provided.

AMENDED DESCRIPTION

SUMMARY

A system for detecting a contaminant according to independent claim 1 and a method for detecting a contaminant according to independent claim 9 are provided. Optional features are recited in the dependent claims.

The features, functions, and advantages that have been discussed can be achieved independently in various examples or may be combined in yet other examples further details of which can be seen with reference to the following description and drawings.

BRIEF SUMMARY OF THE DRAWINGS

FIG. 1 is a schematic view of an additive printer assembly, printing a part;

FIG. 2 is schematic view of the additive printer assembly of FIG. 1, without a light source for printing and with a roller apparatus for moving material from a feed tank toward and onto a build tank for printing;

FIG. 3 is the schematic view of the additive printer assembly of FIG. 2 with the roller apparatus applying a layer of the material on the build tank from the feed tank for printing;

FIG. 4 is the schematic view of the additive printer assembly of FIG. 3 with a light source heating the layer of the material on the build tank intended to be printed and the material reflecting electromagnetic energy originating from the light source and emitting electromagnetic thermal energy toward the optical filter and the infrared camera;

FIG. 5 is the schematic view of the additive printer assembly of FIG. 4 with the roller apparatus removing the layer of the material from the build tank of FIG. 4 which has been determined to contain an unacceptable amount of contaminant prior to starting a printing process;

FIG. 6 includes two schematic views, the bottom schematic view is a top plan view of the layer of material on the build tank of FIG. 3, which in this example includes a metal powder and a contaminant and the top schematic view is a cross section view of the layer of material along line 6-6 of the bottom schematic view, wherein the metal powder and the contaminant are at the same temperature;

FIG. 7 includes the two schematic views of FIG. 6, wherein in the top schematic cross section view includes a light beam impacting the layer of the material on the build tank with the contaminant within the layer of material heating more quickly than the metal powder within the layer of material and emitting electromagnetic thermal radiation energy;

FIG. 8 includes the two schematic views of FIG. 7, wherein more time has transpired with respect to the light beam impacting the layer of material of FIG. 7, such that emission of electromagnetic thermal radiation energy by the metal powder reaches an equilibrium with the emission of electromagnetic thermal radiation energy of the contaminant;

FIG. 9 is a graph which represents an example of the intensity and spectrum of the electromagnetic thermal radiation energy emission from a metal powder and of a polymer fiber contaminant within the layer of material within FIG. 6 with both the metal powder and the polymer fiber contaminant at a same temperature;

FIG. 10 is a graph which represents an example of the intensity and spectrum of the electromagnetic thermal radiation energy being emitted from the metal powder and from the polymer fiber contaminant within the layer of material with the layer of material being initially exposed to a light beam for heating the layer of material as seen in FIGS. 4 and 7;

FIG. 11 is a graph which represents the intensity and spectrum of the electromagnetic thermal radiation energy emission of the metal powder and the polymer fiber contaminant within the layer of material having reached thermal equilibrium, as seen in FIG. 8, after time has transpired with subjecting the material within the layer of material to continued exposure to the light beam from the initial exposure to the light beam of FIG. 7;

FIG. 12 represents a graph of heating of the polymer fiber contaminant and of the metal powder over time with being exposed to the light beam;

FIG. 13 is a method for detecting a contaminant, and

FIG. 14 is a method for removing a layer of material which includes a metal powder and a contaminant.

DESCRIPTION

In fabricating parts by way of additive printing, quality control is important with respect to the material being used for the printing so as to provide sufficient strength for the finished part. An amount of contaminant allowed to be present within the material to be printed may vary based on the specifications for the part. In some instances the specifications may permit the presence of some contaminant and in other instances the specifications may not permit the presence of any contaminant. In an example, to be discussed herein, of printing a part, the material used for printing is a metal powder and an example of a contaminant, which is sought to be detected within the metal powder and which may or may not be present within the metal powder is a polymer fiber. The material for printing can vary as to composition and the contaminant intended to be detected can also vary as to composition.

Since the composition of the material to be printed is different than the contaminant, such as a metal powder for printing, and knows the composition of the contaminant needed to be detected and a polymer fiber as the contaminant, the operator will understand the absorptance to thermal inertia ratio for each of these compositions will likely be different. Absorptance, $\alpha$, is defined as the "ratio of the absorbed radiant or luminous flux to the incident flux under specified conditions". Thermal inertia, $I$, is qualitatively defined as the "capacity of a material to store heat and to delay its transmission" and quantitatively defined as:

$$I = \sqrt{k\rho c}$$

$k$ is thermal conductivity
$\rho$ is density
$c$ is specific heat capacity

In the example to be discussed herein, the absorptance to thermal inertia ratio for the metal powder, $(\alpha/I)_m$ will not be equal to the absorptance to thermal inertia ratio for the polymer fiber $(\alpha/I)_p$ where the $m$ and $p$ subscripts stand for the metal powder and polymer fiber, respectively. This difference in absorptance to thermal inertia ratios for the different compositions can be expressed as $(\alpha/I)_m \neq (\alpha/I)_p$.

With one composition having a greater ratio than the other composition, the operator can apply a light beam to heat the material intended to be printed and the composition within the material with a greater absorptance to thermal inertia ratio will heat more quickly than another composition present within the material and will transmit electromagnetic thermal radiation energy with a greater intensity and spectrum than the other composition.

The transmission of greater intensity and spectrum from the composition in the material with the greater absorptance to thermal inertia ratio will provide a visible contrast with use of an infrared camera to another composition within the material with a lower absorptance to thermal inertia ratio. The visual contrast with use of an infrared camera provides the operator the ability to visually detect contaminant within the material. For example, should no visual contrast appear with the infrared camera, the material heated has the same composition, such as metal powder, and will be used for printing having no contaminant. However, if visual contrast(s) appears with the infrared camera, the contrast indicates the presence and location of a contaminant regardless of whether the metal powder or the contaminant has the greater absorptance to thermal inertia ratio. At that point, with the infrared camera providing the appearance of visual contrast image(s) the operator can locate and quantify a contaminant and determine whether or not to proceed to use the material for printing.

An amount of contaminant permitted to be within the material intended to be printed can vary from no contaminant is permissible to some percentage of presence of the contaminant is permissible for printing. As a result, it would be beneficial to have a system and method for detecting the presence of a contaminant within the material prior to printing such that an operator of the additive printer device can quantify the presence of contaminant and decide whether the material to be printed meets the specifications for the part to be printed. Based on a detection and determination of an amount of presence of a contaminant, the operator of the additive printing process can proceed with the printing the layer of the material for building the part, with removing the contaminant or with removing the layer of material which has an unacceptable content of contaminant in the layer. Should the layer of material be removed, a replacement layer of material can be provided and the operator can proceed with again using the system and method for detecting the presence of a contaminant prior to printing.

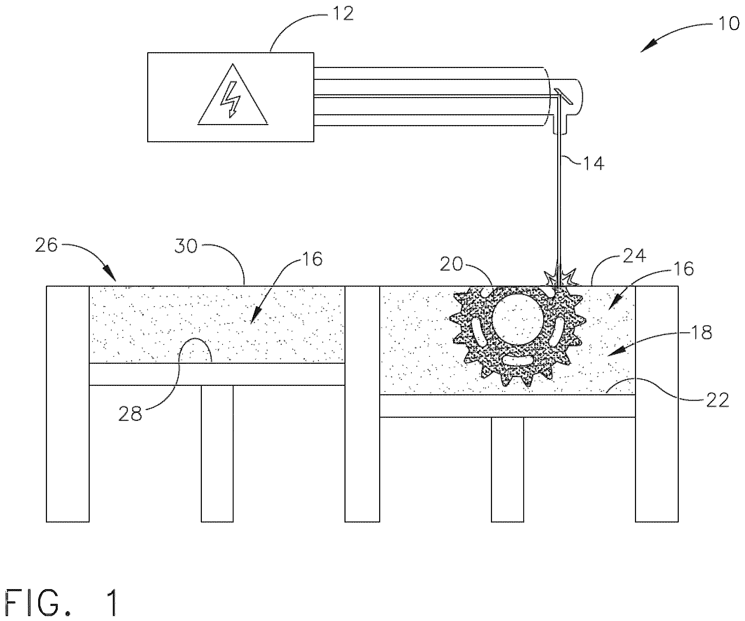

In referring to FIG. 1, additive printer assembly 10 includes a light source 12, which in this example includes laser light source, which generates light beam 14, which in this example, includes a laser beam. Light beam or laser beam 14 is directed, in this example, to material 16 having an acceptable content as specified of contaminant in build tank 18. In this example, material 16 is a metal powder which has an absence of or an acceptable amount of contaminant as specified for part 20 to be printed. Light beam or laser beam 14 is of sufficient energy so as to sinter material 16 to form part 20.

Build tank 18 has first bottom portion 22, which is movable so as to adjust a position of surface 24 of material 16 as needed in progressing through an additive printing of part 20. Adjacent to build tank 18, is feed tank 26, which contains, in this example, material 16 which is fed into build tank 18 during the additive printing process. Feed tank 26 further includes second bottom portion 28, which is also movable so as to adjust a position of surface 30 of material 16 as needed for facilitating feeding material 16 into build tank 18, as will be discussed.

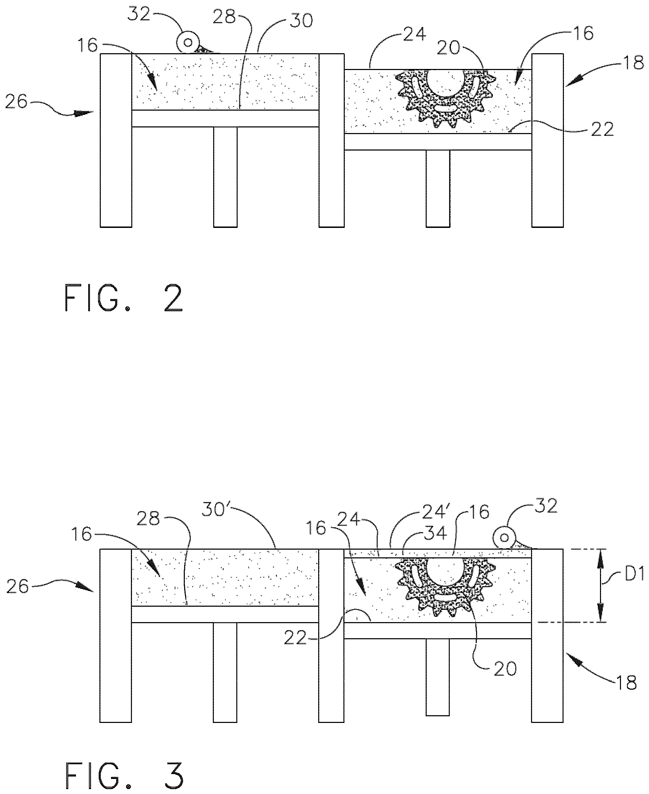

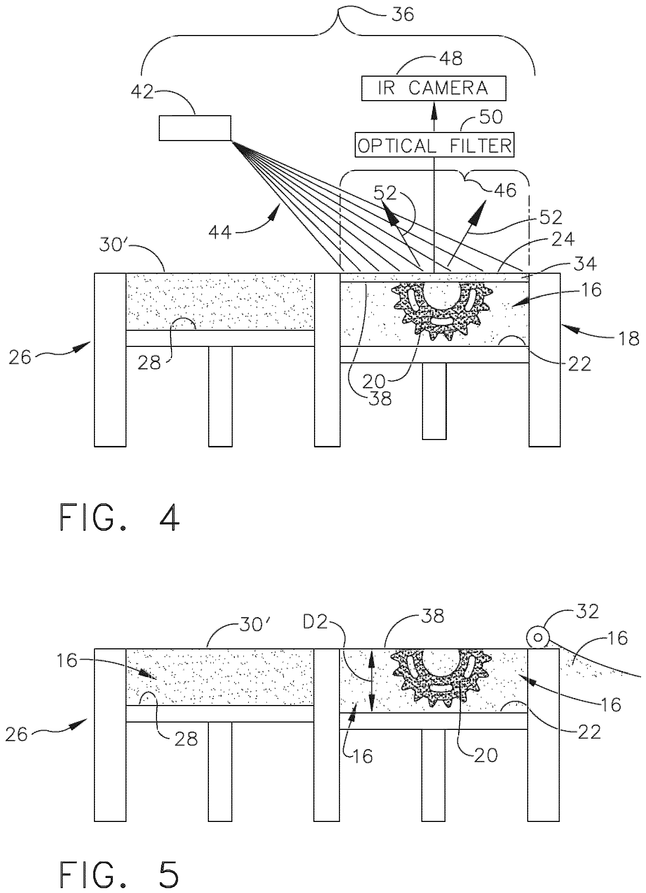

In referring to FIG. 2, first bottom portion 22 of build tank 18 has been lowered, in contrast to FIG. 1, after layer of part 20 has been printed. Lowering of first bottom portion 22 results in lowering surface 24 of material 16 or metal powder in build tank 18 with an acceptable content of contaminant, either none or an acceptable presence, for printing part 20. Second bottom portion 28 of feed tank 26, has been raised, relative to FIG. 1, so as to position surface 30 of material 16 within feed tank 26 to a higher elevation such that roller apparatus 32, which is moved across feed tank 26, scrapes a portion of material 16 out of feed tank 26 forming new surface 30' of material 16 within feed tank 26, as seen in FIGS. 3 and 4.

With first bottom portion 22, which has been lowered, in FIG. 2, thereby lowering surface 24 of material 16 within build tank 18, roller apparatus 32 pushes material 16 from feed tank 26 into build tank 18 forming layer 34 of material 16 overlying surface 24 of material 16 in build tank 18 and forming a new surface 24', as seen in FIG. 3. Layer 34 of material 16 overlies printed part 20 so as to provide additional material 16 to be sintered and added to part 20 with further application of light or laser source 12. As seen in FIG. 3, roller apparatus 32 completes spreading of material 16 across build tank 18 forming new surface 24' of material 16 in preparation for sintering material 16 within layer 34 of material 16, subject to an acceptable determination of contaminant within material 16 within layer 34.

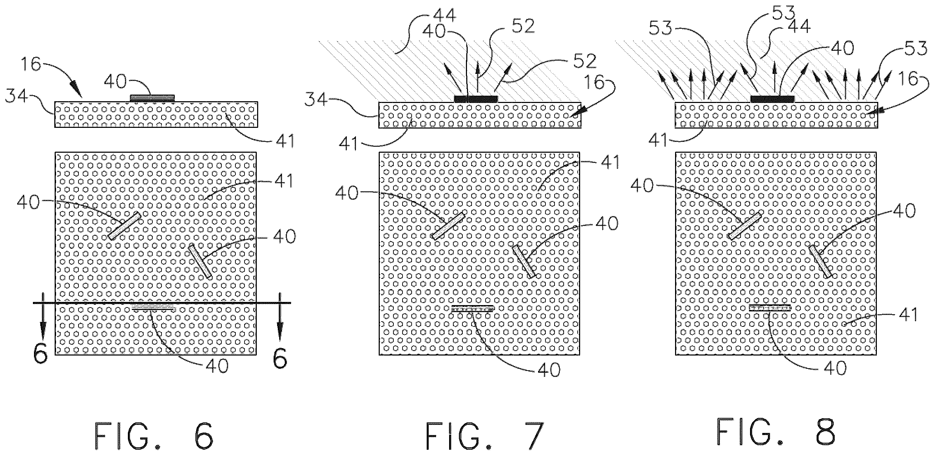

Prior to sintering any portion of material 16 within layer 34 with laser source 12 so as to add another portion to part 20, system 36, as seen in FIG. 4 is employed for detecting absence of contaminant or presence of and location of contaminant, as seen in FIG. 6, within layer 34 of material 16. As mentioned earlier, an example of the material 16 to be sintered is a metal powder and an example of contaminant 40 which may or may not be present in material 16, is a polymer fiber.

Should an undesired amount of contaminant be detected within material 16 within layer 34, first bottom portion 22 of build tank 18 is raised, as seen in FIG. 5, to adequately rise bottom 38 of material 16 of layer 34, formerly designated surface 24 of FIG. 3, such that roller apparatus 32 has access to bottom 38 of material 16 of layer 34. With roller apparatus 32 having access to bottom 38, roller apparatus 32 can be moved across build tank 18 and remove layer 34 of material 16 containing an unacceptable content of contaminant 40, off of build tank 18, as seen in FIG. 5. With scraping off of layer 34, material 16 within build tank 18 remains contaminant free or at least at a contaminant level that is an acceptable level for fabrication reuse.

In referring to FIG. 4, system 36 for detecting contaminant within material 16 layer 34, includes light source 42 or in this example, a laser source, positioned, such that light beam 44 or in this example, laser beam emitted from light source 42 is directed to location 46 to heat layer 34 of material 16 positioned in location 46, which may or may not contain contaminant. System 36 further includes infrared camera 48 positioned aligned with location 46. Without optical filter 50 being present in FIG. 4 and with material 16 being heated by light or laser beam 44, material 16 emits electromagnetic thermal radiation energy 52 as a result of adsorptance to thermal inertia ratio of composition(s) within material 16. With infrared camera 48 aligned with location 46, infrared camera 48 receives electromagnetic thermal radiation energy from layer 34 of material 16 in location 46. As a result, optical contrasts can possibly be seen with two different compositions being present within layer 34 by infrared camera 48. With material 16 being all one composition, such as metal powder, the adsorptance to thermal inertia ratio of the single composition will transmit all the same or uniform electromagnetic thermal radiation energy to infrared camera 48 and infrared camera 48 will provide no visual contrast. With a single composition present in layer 34, infrared camera 48 will show a single color with no visual contrast.

However, as seen in FIG. 6, if there is presence of contaminant 40, such as a polymer fiber, along with metal powder 41, in layer 34 of material 16, each composition of metal powder 41 and polymer fiber contaminant 40 within layer 34 will have different absorptance to thermal inertia ratios. In this example, when heating of material 16 with light source 42, polymer fiber contaminant 40 will heat up more quickly than metal powder 41 within layer 34 of material 16 and will thereby commence transmitting electromagnetic thermal radiation energy earlier than metal powder 41 and providing a higher intensity at a common wavelength of the spectrum than that of metal powder 41.

In this example, light source 42, as seen in FIG. 4, includes a laser source, such as for example a carbon dioxide laser source, such as for example, variable linewidth high-power "Transversely Excited Atmospheric" or T EA $CO_2$ laser source which emits a laser light beam 44, as seen in FIG. 4. In this example, laser source 12 as seen in FIG. 1, for the sintering of material 16 in additive printer assembly 10, is a relatively short-wave laser in contrast to light source 42 in system 36 which utilizes a relatively long-wave laser. For example, light beam or laser beam 44 of light source or laser source 42, for system 36 for detecting contaminant, includes a wavelength within a wavelength range which includes a wavelength of four hundred nanometers (400 nm) up to and including a wavelength of one hundred micrometers (100 $\mu$m).

As seen in FIG. 4, system 36 will operate on layer 34 of material 16, positioned on build tank 18 of additive printer assembly 10. As mentioned earlier in the present example, layer 34 of material 16 will include metal powder 41 absent of contaminant or will include metal powder 41 which has contaminant 40 of polymer fiber within layer 34, as seen in FIG. 6.

In accordance with the present invention, system 36 for detecting contaminant 40 further includes optical filter 50, as seen in FIG. 4. Optical filter 50 is positioned aligned with infrared camera 48 and positioned between infrared camera 48 and material 16 of layer 34 in location 46. Optical filter 50 includes a band pass interference filter which allows a designated portion or band width of the spectrum to pass through the filter and rejects or blocks all other wavelengths. Optical filter 50, can be employed, to block reflecting electromagnetic energy that originates from light source 42, which in this example is a laser source which emits a light beam 44 or laser light beam onto material 16 of layer 34 and which reflects (not shown) toward optical filter 50. Removal of reflecting electromagnetic energy originating from light source 42 enhances visual resolution of electromagnetic thermal radiation energy 52, as seen in FIG. 7, received by infrared camera 48 from the heated composition, in layer 34, having a greater absorptance to thermal inertia ratio. In this example, polymer fiber contaminant 40 has a greater absorptance to thermal inertia ratio than that of metal powder 41 and heats up more quickly than metal powder 41. In an initial time period in which these compositions are exposed to laser or light beam 44 and the composition with a greater absorptance to thermal inertia ratio emits electromagnetic thermal radiation energy 52 in a greater intensity and spectrum than that of metal powder 41, providing a visual contrast with infrared camera 48 to that of metal powder 41 within layer 34.

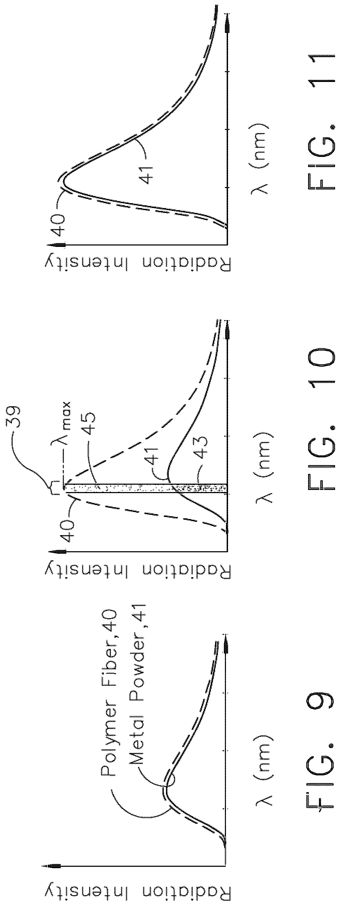

Optical filter 50 is further used to more selectively block electromagnetic energy spectrum from reaching infrared camera 48 so as to further enhance visual contrast of electromagnetic thermal radiation energy of the composition(s) being heated in material 16 in layer 34. In referring to FIGS. 9-11, various intensities and spectrums of electromagnetic thermal radiation energy is emitted from different compositions that can be present in material 16 of layer 34. As mentioned earlier, should material 16 not contain any contaminant 40, there is no visual contrast created and infrared camera 48 does not present any visual contrasts. However, in the present example, with a presence of polymer fiber contaminant 40, as seen in FIG. 6, present in layer 34 with metal powder 41, there would be presence of materials with different compositions having different absorptance to thermal inertia ratios.

Material 16, as seen in FIG. 6, has the presence of two compositions, metal powder 41 and polymer fiber contaminant 40, and both compositions are at the same temperature, which in this example would be room temperature. At the same temperature, both compositions are emitting a black body thermal radiation which are very similar in radiation intensity and in wavelength spectrum ("λ"), as seen in FIG. 9. Under these circumstances, the electromagnetic thermal radiation energy from both compositions which reaches infrared camera 48 are very similar in spectrum and intensity. This similarity in spectrum and radiation intensity will not provide a sufficient readable visual contrast between metal powder 41 and the polymer fiber contaminant 40 by infrared camera 48. In this graphical representation, metal powder 41 composition is represented by the solid line in the graph and polymer fiber contaminant 40 composition is represented by the dashed line in the graph. Thus, at the same temperature condition each composition has a radiation intensity and spectrum ("λ") of emission of thermal electromagnetic radiation energy that is substantially in equilibrium with each other and as mentioned earlier does not provide sufficient visual contrast with infrared camera 48.

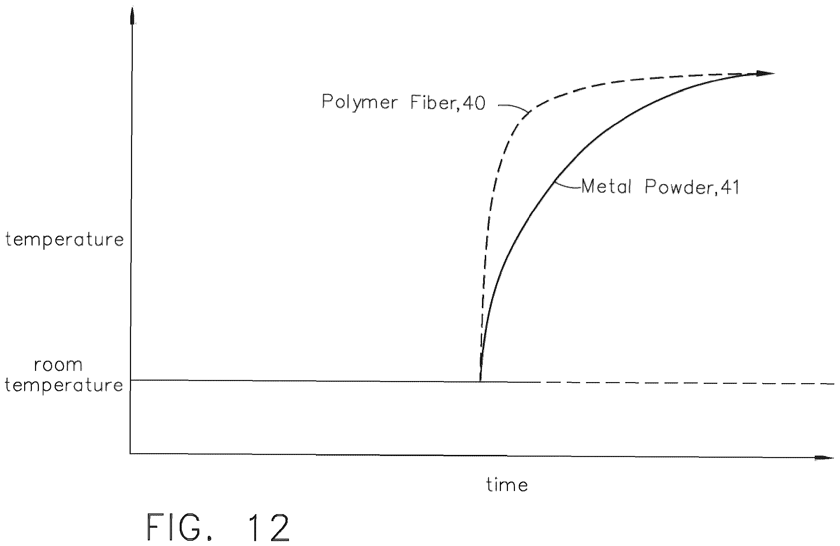

In FIG. 10, light source 42 is turned on and light beam 44, in this example a laser beam, begins to heat up material 16 in layer 34, as seen in FIG. 7. In this example, material 16 includes metal powder 41 and polymer fiber contaminant 40. Polymer fiber contaminant 40, in this example, such that as represented in FIG. 12 polymer fiber contaminant 40 with a greater absorptance to thermal inertia ratio than that of metal powder 41, heats up quicker than metal powder 41. The absorptance to thermal inertia ratio for polymer fiber contaminant 40 is 0.75/601 ≈ 0.001 for example for polymethylacrylate composition, and is much greater than the absorptance to thermal inertia ratio for metal powder 41 is 0.59/7,017 ≈ .0001, for example for titanium powder. The properties of these compositions were obtained, for example, from Tolochko, Nokolay K., et al. "Absorptance of powder materials suitable for laser sintering" of Rapid Prototyping Journal (2000).

As a result, in an initial period of time of exposing material 16 to heating by light or laser beam 44 polymer fiber contaminant 40 climbs in temperature more quickly than metal powder 41 of material 16 in layer 34, as seen in FIG. 12 and emits electromagnetic thermal radiation energy with greater intensity at a similar spectrum as seen in FIG. 10, and with an expanded shifted spectrum and with a greater intensity than that of metal powder 41 in the same initial period of time of being exposed to light or laser beam 44. Based on the material composition of polymer fiber contaminant 40 and the known light source 42 energy imparted onto layer 34 of material 16, the operator will be able to determine a peak thermal wavelength or lambda maximum ("λ max"), as seen in FIG. 10, which is a wavelength of maximum intensity for this polymer fiber contaminant 40. Calculation for peak thermal wavelength, in this example for polymer fiber contaminant 40 is derived using Wein's displacement Law: "λ max = b/T" wherein b is Wien's displacement constant and T is an absolute temperature of a black body. The operator will then have optical filter 50 block out all wavelengths of electromagnetic thermal radiation energy coming from material 16 of layer 34 except a band width which contains the peak thermal wavelength or λ max for, in this example, polymer fiber contaminant 40, which has the greater absorptance to thermal inertia ratio to that of metal powder 41. Bandwidth 39 permitted to pass through optical filter 50 is a bandwidth of approximately 200 nano meters (nm) in this example including wavelength 8.3 micrometers (μm) to and including wavelength 8.5 micrometers (μm) which includes the peak thermal wavelength or λ max of 8.4 micrometers (μm) for polymer fiber contaminant 40, in this example, polymethylacrylate. Metal powder 41 or titanium powder in this example has a radiation intensity 43, as seen in FIG. 10, as represented by the shaded portion within bandwidth 39 positioned below the solid line in graph representing metal powder 41 and contaminant or polymer fiber 40 of polymethylacrylate in this example has a greater radiation intensity 45 as represented by the shaded portion within bandwidth 39 positioned below the dashed line in the graph representing polymer fiber contaminant 40. The greater intensity of radiation intensity of polymer fiber or contaminant 40 to that of radiation intensity of titanium powder or metal powder 41 provides a visual contrast for infrared camera 48 thereby providing visual detection by the operator of contaminant or polymer fiber 40 in material 16 of layer 34, in this example.

The filtering by optical filter 50 blocks electromagnetic thermal radiation energy exclusive of a bandwidth, as mentioned above, of electromagnetic thermal radiation energy spectrum transmitted to and otherwise reaches infrared camera 48 from the composition which contains the peak thermal wavelength or λ max for that composition and which has a greater absorptance to thermal inertia ratio.

The filtered electromagnetic thermal radiation energy permitted through optical filter 50 to infrared camera 48, which includes for example bandwidth 39 and peak thermal wavelength λ max provides a higher visual contrast to, in this example, radiation intensity of the electromagnetic thermal energy emitted by metal powder 41 in the same spectrum. The differential in radiation intensity as discussed above for radiation intensity 45 to that of radiation intensity 43 provides the visual contrast image with infrared camera 48 providing detection and location of the polymer fiber contaminant 40, in this example, with a higher contrast with respect to the electromagnetic thermal radiation energy of metal powder 41. The operator with looking at infrared camera 48 is able to visually detect and identify the location of polymer fiber contaminant 40 within layer 34 of material 16 which also includes metal powder 41 by way of differential in radiation intensity.

It should be understood with respect to the absorptance to thermal inertia ratio of a particular composition, the composition with a higher ratio could be the composition used in constructing the part, metal powder, for example, rather than that of in this example polymer fiber contaminant 40. In that case, the visual imaging will be that of the composition of the higher absorptance to thermal inertia ratio visually showing in the infrared camera 48 the presence and location of the material used for example in the additive building of the part such as the metal powder. Thus, gaps in the visual image from the infrared camera 48 will be that of contaminant 40. The positive visual imaging in the infrared camera 48 is dependent on the composition of material to be detected having a greater absorptance to thermal inertia ratio than another composition within material 16 in layer 34. The operation of system 36, in this example, operates positively imaging the composition within material 16 of layer 34 having a greater absorptance to thermal inertia ratio. The composition which has a greater absorptance to thermal inertia ratio emits electromagnetic thermal radiant energy which has a band width of such electromagnetic thermal radiant energy which includes the composition's peak thermal wavelength or λ max pass through optical filter 50 to infrared camera 48 imaging that composition within layer 34 of the material.

In referring to FIGS. 8 and 11, more time has transpired with respect to exposing material 16 to heating with light source 42. As reflected in the graph of FIG. 12, as time progresses with material 16 being exposed to heating with light source 42, the temperature of metal powder 41, for example, and polymer fiber contaminant 40, for example, reach an equilibrium. As a result, as seen in FIGS. 8 and 11, both metal powder 41 and polymer fiber contaminant 40 reach an equilibrium state of emitting a similar spectrum and intensity of electromagnetic thermal radiation energy as seen in FIG. 11 and emit a similar spectrum and intensity of electromagnetic thermal radiation energy 53, as seen in FIG. 8.

In the present example, with metal powder 41 and polymer fiber contaminant 40 reaching an equilibrium state of temperature an insufficient difference in intensity of a given wavelength in the spectrum between metal powder 41 and polymer fiber contaminant 40 does not provide a sufficient difference in intensity so as to provide visual contrast in infrared camera 48. As a result, the visual contrast imaging for system 36 is time dependent on the compositions being exposed to light source 42 to be heated.

In referring to FIG. 12 the difference in the rate of heating of the compositions results in the differing in emitting of electromagnetic thermal radiation energy for each composition of metal powder 41 and the polymer fiber contaminant 40 used in this example. The quicker the composition heats up the quicker that composition emits electromagnetic thermal radiation energy 52 which, as described above provides a differential in intensity of the electromagnetic thermal radiation energy being emitted by the particular composition in contrast to the other composition present in layer 34. Thus, polymer fiber contaminant 40 provides the emission of electromagnetic thermal radiation energy creating a differential in intensity of the electromagnetic thermal radiation energy of that of metal powder 41 as described above that results in providing an image in infrared camera 48 of that composition. Metal powder 41 and polymer fiber contaminant 40 start out within layer 34 at a common or room temperature, as mentioned earlier, with respect to FIGS 6, 9 and 12. With heating these compositions within layer 34, the differential of absorptance to thermal inertia ratios in the compositions results in the greater ratio value composition providing an image in infrared camera 48 as described above providing a visual image contrast between the compositions which provides the operator a visual image which detects the presence and location of polymer fiber contaminant 40 in layer 34. As time progresses with respect to the application of light or laser beam 44 to layer 34, temperatures of the compositions, metal powder 41 and polymer fiber contaminant 40, reach equilibrium temperature as seen in FIG. 12. As a result, the spectrum and intensity of their electromagnetic thermal radiation energy emission also reach equilibrium as seen in FIGS. 8 and 11 resulting in the diminishing of visual contrast provided by infrared camera 48.

System 36 further includes roller apparatus 32 associated with build tank 18 of additive printer assembly 10 as seen in FIGS. 2, 3 and 5. Roller apparatus 32, as earlier discussed, moves material 16 from feed tank 26 to build tank 18. In addition, roller apparatus 32 is used to remove layer 34 from build tank 18 when system 36 detects an unacceptable presence of polymer fiber contaminant 40, in the present example, within for example, metal powder 41 of material 16.

Roller apparatus 32 is positioned at first elevation D1 relative to first bottom portion 22 of build tank 18, as seen in FIG. 3, and moved across build tank 18, resulting in layer 34 of material 16 being added on build tank 18 with material 16 from feed tank 26 as seen in FIG. 2. Alternatively, roller apparatus 32 positioned in second elevation D2, as seen in FIG. 5, relative to the first bottom portion 22 of build tank 18 and moved across build tank 18 layer 34 of material 16 is removed from build tank 18, which occurs with system 36 detecting in this example polymer fiber contaminant 40 content within metal powder 41 within layer 34 of material 16 which is unacceptable.

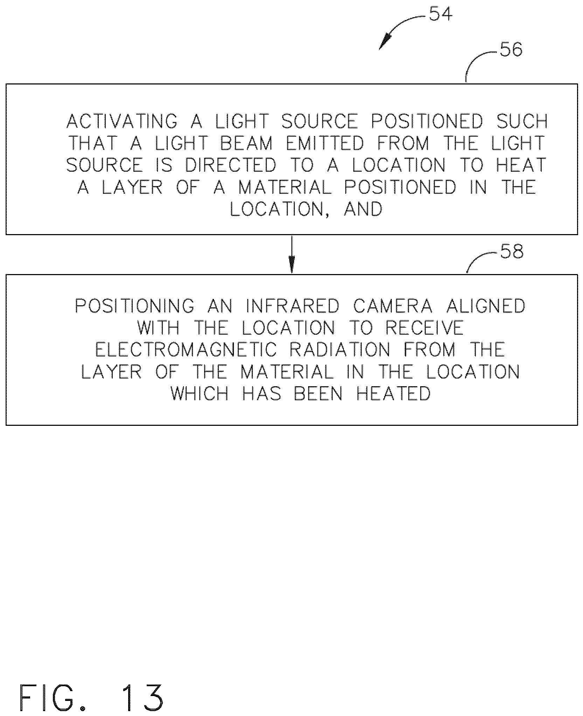

In referring to FIG. 13, method 54 for detecting contaminant 40 includes heating 56 layer 34 of material 16 positioned in location 46 with light source 42 directed to layer 34 of material 16 positioned in location 46 such that light beam 44 from light source 42 reaches layer 34 of material 16 in location 46. Method 54 further includes receiving 58 electromagnetic thermal radiation energy from layer 34 of material 16 positioned in location 46 with infrared camera 48 aligned with location 46. Method 54 further includes positioning layer 34 of material 16 on build tank 18 of additive printer assembly 10, wherein layer 34 of material 16 includes one of metal powder or the metal powder and polymer fiber, which is contaminant 40. Light source 42 includes a laser light source wherein light beam 44 emitted from the laser light source includes a laser light beam in this example.

Method 54 further includes positioning optical filter 50 aligned with infrared camera 48 and positioned between infrared camera 48 and material 16 of layer 34. Method 54 further includes filtering, with optical filter 50, electromagnetic radiation of light beam 44 from light source 42 which is reflected by material 16 of layer 34. As discussed earlier, method 54 further includes filtering, with optical filter 50, electromagnetic thermal radiation energy emitted from material 16 of layer 34, wherein material 16 includes a metal powder and a contaminant 40 polymer fiber, exclusive of a peak wavelength or $\lambda$ max from one of the metal powder or the polymer fiber, which ever has a greater absorptance to thermal inertia ratio allowing the peak wavelength or $\lambda$ max to be transmitted from material 16 to infrared camera 48.

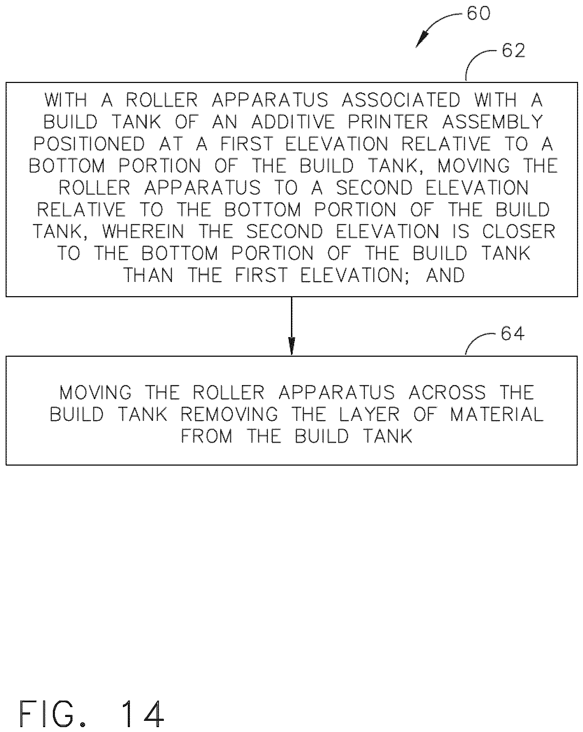

In referring to FIG. 14, method 60 for removing layer 34 of material 16 including metal powder and contaminant 40, such as seen in FIG. 6 includes with roller apparatus 32 associated with build tank 18 of additive printer assembly 10 positioned at a first elevation D1, as seen in FIG. 3, relative to first bottom portion 22 of build tank 18, moving 62 roller apparatus 32 to second elevation D2 relative to first bottom portion 22 of build tank 18, wherein second elevation D2 is closer to first bottom portion 22 of build tank 18 than first elevation D1 of FIG. 3 and moving 64 roller apparatus 32 across build tank 18, as seen in FIG. 5, removing layer 34 of material 16 from build tank 18. In this example, layer 34 of material 16 removed from build tank 18 includes metal powder and an unacceptable content within material 16 of layer 34 of contaminant 40, which in this example includes a polymer fiber. Once layer 34 is removed roller apparatus 32 can be used to add another layer 34 on build tank 18 wherein in this example, system 36 is employed for detecting presence of contaminant 40 within material 16 prior to determining whether to proceed with printing with additive printer assembly 10.

While various embodiments have been described above, this disclosure is not intended to be limited thereto. Variations can be made to the disclosed embodiments that are still within the scope of the appended claims.

## Claims

1. A system (36) for detecting a contaminant in a layer (34) of a material (16) positioned in a location (46), wherein either a single composition or two different compositions, one of which is a contaminant, can be present in the layer (34) of the material (16), the system (36) comprising:

   a light source (42) directed to heat the layer (34) of the material (16) positioned in the location (46),
   an infrared camera (48) positioned aligned with the location (46) to receive electromagnetic thermal radiation energy from the layer (34) of the material (16) in the location, and
   an optical filter (50) positioned aligned with the infrared camera (48) and positioned between the infrared camera (48) and the location (46), wherein the optical filter (50) is configured to filter electromagnetic radiation energy of the light beam emitted from the light source (42) and reflected by the material (16), and
   **characterised in that**
   the optical filter (50) is configured to filter thermal electromagnetic radiation energy exclusive of a peak thermal wavelength ($\lambda$ max) of one of the two compositions.

2. The system (36) of claim 1, wherein the light source (42) comprises a laser source which emits a laser light beam, and optionally wherein:

   the laser source comprises a carbon dioxide laser source; and
   the laser light beam of the laser source comprises a wavelength within a wavelength range which includes a wavelength of four hundred nanometers (400 nm) up to and including a wavelength of one hundred micrometers (100 $\mu$m).

3. The system (36) of claim 1 or 2, wherein the system (36) is for detecting a contaminant in a layer (34) of the material (16) that includes one of a metal powder (41) as the single composition or the metal powder (41) and a polymer fiber (40) as the two different compositions, the polymer fiber (40) being the contaminant.

4. The system (36) of any one of claims 1-3, wherein the system (36) is for detecting a contaminant in a layer (34) of a material (16) in a location (46) positioned on a build tank (18) of an additive printer assembly.

5. The system (36) of any one of claims 1-4, wherein:

the system (36) is for detecting a contaminant in a material (16) that comprises a metal powder (41) and a polymer fiber (40) as the two different compositions, polymer fiber (40) being the contaminant; and
the optical filter (50) is configured to filter thermal electromagnetic radiation energy exclusive of a peak thermal wavelength ($\lambda$ max) of one of the metal powder (41) or the polymer fiber (40).

6. The system of claim 5, wherein the optical filter (50) is configured so that the peak thermal wavelength ($\lambda$ max) is transmitted to the infrared camera (48) from the one of the metal powder (41) or the polymer fiber (40) which has a greater absorptance to thermal inertia ratio.

7. The system of any one of claims 1-6, further including a roller apparatus (32) associated with a build tank (18) of an additive printer assembly (10).

8. The system of claim 7, wherein with the roller apparatus (32) positioned at a first elevation relative to a first bottom portion (22) of the build tank (18) and moved across the build tank (18), the layer (34) of the material (16) is added on the build tank (18) or with the roller apparatus (32) positioned in a second elevation relative to the first bottom portion (22) of the build tank (18) and moved across the build tank (18) the layer (34) of the material is removed from the build tank (18).

9. A method for detecting a contaminant in a layer of a material (16) positioned in a location (46), wherein either a single composition or two different compositions, one of which is a contaminant, can be present in the layer (34) of the material (16), the method comprising:

heating the layer of the material (16) positioned in the location (46) with a light source (42) directed to the layer (34) of material (16) positioned in the location (46), and

receiving electromagnetic thermal radiation energy from the layer (34) of the material (16) positioned in the location (46) with an infrared camera (48) aligned with the location,
the method further including
positioning an optical filter (50) aligned with the infrared camera (48) and positioned between the infrared camera (48) and the material (16), filtering, with the optical filter (50), electromagnetic radiation energy of a light beam from the light source which is reflected by the material (16), and **characterised in that** it includes filtering, with the optical filter (50), electromagnetic thermal radiation energy from the material (16), exclusive of a peak wavelength from of one of the two compositions.

10. The method of claim 9, further including:

positioning the layer (34) of the material (16) on a build tank (18) of an additive printer assembly (10), wherein the layer (34) of the material (16) comprises one of a metal powder (41) as the single composition or the metal powder (41) and a polymer fiber (40) as the two different compositions, the polymer fiber (40) being the contaminant; and
the light source (42) comprising a laser light source, wherein the light beam emitted from the laser light source comprises a laser light beam.

11. The method of claim 9 or 10, further including filtering, with the optical filter (50), electromagnetic thermal radiation energy from the material (16), comprising a metal powder (41) and a polymer fiber (40) as the two different compositions, the polymer fiber (40) being the contaminant, exclusive of a peak wavelength from the metal powder (41) or the polymer fiber (40).

12. The method of claim 11, wherein the peak wavelength is transmitted from one of the metal powder (41) or the polymer fiber (40) which has a greater absorptance to thermal inertia ratio.

**Patentansprüche**

1. System (36) zum Erkennen einer Verunreinigung in einer Schicht (34) eines Materials (16), die an einer Stelle (46) positioniert ist, wobei entweder eine einzige Zusammensetzung oder zwei unterschiedliche Zusammensetzungen, von denen eine eine Verunreinigung ist, in der Schicht (34) des Materials (16) vorhanden sein kann, wobei das System (36) Folgendes umfasst:

eine Lichtquelle (42), die gerichtet ist, um die an der Stelle (46) positionierte Schicht (34) des Materials (16) zu erhitzen,

eine Infrarotkamera (48), die an der Stelle (46) ausgerichtet positioniert ist, um elektromagnetische Wärmestrahlungsenergie von der Schicht (34) des Materials (16) an der Stelle zu empfangen, und

ein optischer Filter (50), die an der Infrarotkamera (48) ausgerichtet positioniert ist und zwischen der Infrarotkamera (48) und der Stelle (46) positioniert ist,

wobei der optische Filter (50) so konfiguriert ist, dass sie elektromagnetische Strahlungsenergie des von der Lichtquelle (42) abgegebenen und durch das Material (16) reflektierten Lichtstrahls filtert, und **dadurch gekennzeichnet, dass** der optische Filter (50) so konfiguriert ist, dass sie elektromagnetische Wärmestrahlungsenergie ausschließend eine Spitzenwärmewellenlänge (λ max) von einer der zwei Zusammensetzungen filtert.

2. System (36) nach Anspruch 1, wobei die Lichtquelle (42) eine Laserquelle umfasst, die einen Laserlichtstrahl abgibt, und optional wobei:

die Laserquelle eine Kohlendioxidlaserquelle umfasst; und
der Laserlichtstrahl der Laserquelle eine Wellenlänge innerhalb eines Wellenlängenbereichs umfasst, der eine Wellenlänge von vierhundert Nanometern (400 nm) einschließt und bis zu einer Wellenlänge von einhundert Mikrometern (100 μm) einschließt.

3. System (36) nach Anspruch 1 oder 2, wobei das System (36) zum Erkennen einer Verunreinigung in einer Schicht (34) des Materials (16) dient, die eines von einem Metallpulver (41) als einzige Zusammensetzung oder das Metallpulver (41) und eine Polymerfaser (40) als zwei unterschiedliche Zusammensetzungen einschließt, wobei die Polymerfaser (40) die Verunreinigung ist.

4. System (36) nach einem der Ansprüche 1-3, wobei das System (36) zum Erkennen einer Verunreinigung in einer Schicht (34) eines Materials (16) an einer Stelle (46) dient, die auf einem Bautank (18) einer additiven Druckeranordnung positioniert ist.

5. System (36) nach einem der Ansprüche 1-4, wobei:

das System (36) zum Erkennen einer Verunreinigung in einem Material (16) dient, das ein Metallpulver (41) und eine Polymerfaser (40) als die zwei unterschiedlichen Zusammensetzungen umfasst, wobei die Polymerfaser (40) die Verunreinigung ist; und

der optische Filter (50) so konfiguriert ist, dass sie elektromagnetische Wärmestrahlungsenergie ausschließend eine Spitzenwärmewellenlänge (λ max) von einem des Metallpulvers (41) oder der Polymerfaser (40) filtert.

6. System nach Anspruch 5, wobei der optische Filter (50) so konfiguriert ist, dass die Spitzenwärmewellenlänge (λ max) von dem einen des Metallpulvers (41) oder der Polymerfaser (40), das ein größeres Verhältnis von Absorptionsgrad zu Wärmeträgheit aufweist, an die Infrarotkamera (48) übertragen wird.

7. System nach einem der Ansprüche 1-6, weiter einschließend eine Walzenvorrichtung (32), die einem Bautank (18) einer additiven Druckeranordnung (10) zugeordnet ist.

8. System nach Anspruch 7, wobei,

wenn die Walzenvorrichtung (32) auf einer ersten Erhebung in Bezug auf einen ersten Bodenabschnitt (22) des Bautanks (18) positioniert ist und über den Bautank (18) bewegt wird, die Schicht (34) des Materials (16) auf dem Bautank (18) hinzugefügt wird, oder

wenn die Walzenvorrichtung (32) auf einer zweiten Erhebung in Bezug auf den ersten Bodenabschnitt (22) des Bautanks (18) positioniert ist und über den Bautank (18) bewegt wird, die Schicht (34) des Materials von dem Bautank (18) entfernt wird.

9. Verfahren zum Erkennen einer Verunreinigung in einer Schicht eines Materials (16), das an einer Stelle (46) positioniert ist, wobei entweder eine einzige Zusammensetzung oder zwei unterschiedliche Zusammensetzungen, von denen eine eine Verunreinigung ist, in der Schicht (34) des Materials (16) vorhanden sein kann, wobei das Verfahren Folgendes umfasst:

Erhitzen der Schicht des Materials (16), die an der Stelle (46) positioniert ist, mit einer Lichtquelle (42), die auf die an der Stelle (46) positionierte Schicht (34) von Material (16) gerichtet ist, und

Empfangen von elektromagnetischer Wärmestrahlungsenergie von der Schicht (34) des Materials (16), die an der Stelle (46) positioniert ist, mit einer Infrarotkamera (48), die an der Stelle ausgerichtet ist,

wobei das Verfahren weiter Folgendes einschließt

Positionieren eines optischen Filters (50), die an der Infrarotkamera (48) ausgerichtet ist und zwischen der Infrarotkamera (48) und dem Material (16) positioniert ist,

Filtern, mit dem optischen Filter (50), von elektromagnetischer Strahlungsenergie von einem Lichtstrahl von der Lichtquelle, der durch das Material (16) reflektiert wird, und **dadurch gekennzeichnet, dass** es Folgendes einschließt Filtern, mit dem optischen Filter (50), von elektromagnetischer Wärmestrahlungsenergie von dem Material (16) ausschließend eine Spitzenwellenlänge von einer der zwei Zusammensetzungen.

10. Verfahren nach Anspruch 9, weiter einschließend:

Positionieren der Schicht (34) des Materials (16) auf einem Bautank (18) einer additiven Druckeranordnung (10), wobei die Schicht (34) des Materials (16) eines von einem Metallpulver (41) als einzige Zusammensetzung oder das Metallpulver (41) und eine Polymerfaser (40) als die zwei unterschiedlichen Zusammensetzungen umfasst, wobei die Polymerfaser (40) die Verunreinigung ist; und

die Lichtquelle (42) eine Laserlichtquelle umfasst, wobei der von der Laserlichtquelle abgegebene Lichtstrahl einen Laserlichtstrahl umfasst.

11. Verfahren nach Anspruch 9 oder 10, weiter einschließend Filtern, mit dem optischen Filter (50), von elektromagnetischer Wärmestrahlungsenergie von dem Material (16), das ein Metallpulver (41) und eine Polymerfaser (40) als die zwei unterschiedlichen Zusammensetzungen umfasst, wobei die Polymerfaser (40) die Verunreinigung ist, ausschließend eine Spitzenwellenlänge von dem Metallpulver (41) oder der Polymerfaser (40).

12. Verfahren nach Anspruch 11, wobei die Spitzenwellenlänge von einem des Metallpulvers (41) oder der Polymerfaser (40), das ein größeres Verhältnis von Absorptionsgrad zu Wärmeträgheit aufweist, übertragen wird.

**Revendications**

1. Système (36) pour détecter un contaminant dans une couche (34) d'un matériau (16) positionné à un emplacement (46), dans lequel soit une seule composition, soit deux compositions différentes, dont l'une est un contaminant, peuvent être présentes dans la couche (34) du matériau (16), le système (36) comprenant :

une source de lumière (42) dirigée pour chauffer la couche (34) du matériau (16) positionnée à l'emplacement (46),
une caméra infrarouge (48) positionnée alignée avec l'emplacement (46) pour recevoir l'énergie de rayonnement thermique électromagnétique provenant de la couche (34) du matériau (16) dans l'emplacement, et
un filtre optique (50) positionné de façon alignée avec la caméra infrarouge (48) et positionné entre la caméra infrarouge (48) et l'emplacement (46),
dans lequel le filtre optique (50) est configuré pour filtrer l'énergie de rayonnement électromagnétique du faisceau de lumière émis par la source de lumière (42) et réfléchi par le matériau (16), et **caractérisé en ce que** le filtre optique (50) est configuré pour filtrer l'énergie de rayonnement électromagnétique thermique à l'exclusion d'une longueur d'onde thermique maximale ($\lambda$ max) de l'une des deux compositions.

2. Système (36) selon la revendication 1, dans lequel la source de lumière (42) comprend une source laser qui émet un faisceau de lumière laser, et facultativement dans lequel :

la source laser comprend une source laser au dioxyde de carbone ; et
le faisceau de lumière laser de la source laser comprend une longueur d'onde dans une plage de longueurs d'onde qui inclut une longueur d'onde de quatre cents nanomètres (400 nm) jusqu'à et incluant une longueur d'onde de cent micromètres (100 $\mu$m).

3. Système (36) selon la revendication 1 ou la revendication 2, dans lequel le système (36) sert à détecter un contaminant dans une couche (34) du matériau (16) qui inclut l'une parmi une poudre métallique (41) en tant que seule composition ou la poudre métallique (41) et une fibre polymère (40) en tant que deux compositions différentes, la fibre polymère (40) étant le contaminant.

4. Système (36) selon l'une quelconque des revendications 1 à 3, dans lequel le système (36) sert à détecter un contaminant dans une couche (34) d'un matériau (16) dans un emplacement (46) positionné sur un réservoir de fabrication (18) d'un ensemble imprimante additive.

5. Système (36) selon l'une quelconque des revendications 1 à 4, dans lequel :

le système (36) sert à détecter un contaminant dans un matériau (16) qui comprend une poudre métallique (41) et une fibre polymère (40) en tant que deux compositions différentes, la fibre polymère (40) étant le contaminant ; et
le filtre optique (50) est configuré pour filtrer l'énergie du rayonnement électromagnétique thermique à l'exclusion d'une longueur d'onde thermique maximale ($\lambda$ max) de l'une de la poudre métallique (41) ou de la fibre polymère (40).

**6.** Système selon la revendication 5, dans lequel le filtre optique (50) est configuré de telle sorte que la longueur d'onde thermique maximale (λ max) est transmise à la caméra infrarouge (48) à partir de celle parmi la poudre métallique (41) ou la fibre polymère (40) qui présente un rapport facteur d'absorption/inertie thermique plus élevé.

**7.** Système selon l'une quelconque des revendications 1 à 6, incluant en outre un appareil à rouleaux (32) associé à un réservoir de fabrication (18) d'un ensemble imprimante additive (10).

**8.** Système selon la revendication 7, dans lequel avec l'appareil à rouleaux (32) positionné à une première élévation par rapport à une première partie inférieure (22) du réservoir de fabrication (18) et déplacé à travers le réservoir de fabrication (18), la couche (34) du matériau (16) est ajoutée sur le réservoir de fabrication (18) ou avec l'appareil à rouleaux (32) positionné à une seconde élévation par rapport à la première partie inférieure (22) du réservoir de fabrication (18) et déplacé à travers le réservoir de fabrication (18), la couche (34) du matériau est retirée du réservoir de fabrication (18).

**9.** Procédé de détection d'un contaminant dans une couche d'un matériau (16) positionnée à un emplacement (46), dans lequel soit une seule composition, soit deux compositions différentes, dont l'une est un contaminant, peuvent être présentes dans la couche (34) du matériau (16), le procédé comprenant :

le chauffage de la couche du matériau (16) positionnée à l'emplacement (46) avec une source de lumière (42) dirigée vers la couche (34) de matériau (16) positionnée à l'emplacement (46), et
la réception de l'énergie de rayonnement thermique électromagnétique provenant de la couche (34) du matériau (16) positionnée à l'emplacement (46) avec une caméra infrarouge (48) alignée avec l'emplacement,
le procédé incluant en outre
le positionnement d'un filtre optique (50) aligné avec la caméra infrarouge (48) et positionné entre la caméra infrarouge (48) et le matériau (16),
le filtrage, avec le filtre optique (50), de l'énergie du rayonnement électromagnétique d'un faisceau de lumière provenant de la source de lumière qui est réfléchi par le matériau (16), et
**caractérisé en ce qu'**il inclut
le filtrage, avec le filtre optique (50), de l'énergie du rayonnement thermique électromagnétique provenant du matériau (16), à l'exclusion d'une longueur d'onde maximale provenant de l'une des deux compositions.

**10.** Procédé selon la revendication 9, incluant en outre :

le positionnement de la couche (34) du matériau (16) sur un réservoir de fabrication (18) d'un ensemble imprimante additive (10), dans lequel la couche (34) du matériau (16) comprend l'une parmi une poudre métallique (41) en tant que seule composition ou la poudre métallique (41) et une fibre polymère (40) en tant que deux compositions différentes, la fibre polymère (40) étant le contaminant ; et
la source de lumière (42) comprenant une source de lumière laser, dans lequel le faisceau de lumière émis par la source de lumière laser comprend un faisceau de lumière laser.

**11.** Procédé selon la revendication 9 ou la revendication 10, incluant en outre le filtrage, avec le filtre optique (50), de l'énergie de rayonnement thermique électromagnétique provenant du matériau (16), comprenant une poudre métallique (41) et une fibre polymère (40) en tant que deux compositions différentes, la fibre polymère (40) étant le contaminant, à l'exclusion d'une longueur d'onde maximale provenant de la poudre métallique (41) ou de la fibre polymère (40).

**12.** Procédé selon la revendication 11, dans lequel la longueur d'onde maximale est transmise à partir de celle parmi la poudre métallique (41) ou la fibre polymère (40) qui présente un rapport facteur d'absorption sur inertie thermique plus élevé.

FIG. 1

FIG. 2

FIG. 3

FIG. 4

FIG. 5

FIG. 6          FIG. 7          FIG. 8

FIG. 11

FIG. 10

FIG. 9

FIG. 12

EP 4 016 064 B1

54

56

ACTIVATING A LIGHT SOURCE POSITIONED SUCH THAT A LIGHT BEAM EMITTED FROM THE LIGHT SOURCE IS DIRECTED TO A LOCATION TO HEAT A LAYER OF A MATERIAL POSITIONED IN THE LOCATION, AND

58

POSITIONING AN INFRARED CAMERA ALIGNED WITH THE LOCATION TO RECEIVE ELECTROMAGNETIC RADIATION FROM THE LAYER OF THE MATERIAL IN THE LOCATION WHICH HAS BEEN HEATED

FIG. 13

60

62

WITH A ROLLER APPARATUS ASSOCIATED WITH A
BUILD TANK OF AN ADDITIVE PRINTER ASSEMBLY
POSITIONED AT A FIRST ELEVATION RELATIVE TO A
BOTTOM PORTION OF THE BUILD TANK, MOVING THE
ROLLER APPARATUS TO A SECOND ELEVATION
RELATIVE TO THE BOTTOM PORTION OF THE BUILD
TANK, WHEREIN THE SECOND ELEVATION IS CLOSER
TO THE BOTTOM PORTION OF THE BUILD TANK
THAN THE FIRST ELEVATION; AND

64

MOVING THE ROLLER APPARATUS ACROSS THE
BUILD TANK REMOVING THE LAYER OF MATERIAL
FROM THE BUILD TANK

FIG. 14

**REFERENCES CITED IN THE DESCRIPTION**

**Patent documents cited in the description**

- US 20180104742 A1

- US 20170120337 A1

**Non-patent literature cited in the description**

- **TOLOCHKO, NOKOLAY K et al.** Absorptance of powder materials suitable for laser sintering. *Rapid Prototyping Journal,* 2000